# NEUE EUROPÄISCHE PATENTSCHRIFT

(11) **EP 0 587 592 B2**
(45) Veröffentlichungstag und Bekanntmachung des Hinweises auf die Entscheidung über den Einspruch: **13.10.1999**
(45) Hinweis auf die Patenterteilung: 17.01.1996
(21) Anmeldenummer: 92909825.9
(22) Anmeldetag: 14.05.1992
(51) Int. Cl.: B23B 27/14

(54) **VIELECKIGER ODER RUNDER SCHNEIDEINSATZ**
POLYGONAL OR CIRCULAR CUTTING INSERT
INSERT DE COUPE POLYGONAL OU ROND

(30) Priorität: 01.06.1991 DE 4118065
(43) Veröffentlichungstag der Anmeldung: 23.03.1994
(73) Patentinhaber: Widia GmbH, 45145 Essen (DE)
(72) Erfinder: AGUSTIN PAYA, José, D-4330 Mülheim (DE); REITER, Norbert, D-4020 Mettmann (DE)
(74) Vertreter: Vomberg, Friedhelm, Dipl.-Phys.
(86) Internationale Anmeldenummer: DE9200410
(87) Internationale Veröffentlichungsnummer: WO9221467

(56) Entgegenhaltungen:
- EP-A- 0 166 898
- SU-A- 1 611 583
- US-A- 4 988 242
- US-A- 5 046 899
- "Setting A New Fashion In Chip-Control, Coromant Q-Line", Sandvik, 1987

## Beschreibung

Die Erfindung betrifft einen Schneideinsatz zur spanbildenden Bearbeitung, der an seinen Spanflächen mit einer Vielzahl von erhabenen Spanformelementen versehen ist, die sich in ihrem Querschnitt nach oben reduzieren und die im Abstand zu den Schneidkanten in Reihe angeordnet sind.

Solche Schneideinsätze sind beispielsweise aus der DE-A 22 31 631, DE-B 23 09 443 und der DE 31 48 535 C2 bekannt.

Aus der DE-A 22 31 631 ist ein Schneidwerkzeug mit einem Spanbrecher, mit einem an dem Brechergrundkörper angebrachten Schneidmesser und mit einer parallel neben dem Schneidmesser verlaufenden Nut bekannt, in der mindestens ein kegelstumpfförmiger Vorsprung an einer Stelle vorgesehen ist, die sich neben einem nasenförmigen Teil des Brechergrundkörpers befindet.

Nach dem in der DE-B 23 09 443 gemachten Vorschlag sind in Spanbrechernuten eine Vielzahl von mit Abstand nebeneinanderliegenden Kugelsegmenten bestehende Spanbrechervorsprünge angeordnet.

Die genannten Schneideinsätze sind jedoch aufgrund der Anordnung der Spanformelemente und der Spanbrechernutgeometrie nur in einem begrenzten Bereich unterschiedlicher Schnittbedingungen, wie etwa unterschiedlicher Schnittiefen, Vorschubgeschwindigkeiten, Schnittgeschwindigkeiten sowie Werkstoffe verwendbar. Um die Einsatzmöglichkeit der Schneideinsätze zu erhöhen und zur besseren Formung und Entfernung des Schneidspanes ist in der DE 31 48 535 C2 vorgeschlagen worden, die Spanformelemente im wesentlichen pyramidenstumpfförmig mit im wesentlichen dreieckiger Grundfläche auszubilden, wobei jeweils eine der Grundflächenbegrenzungslinien in Richtung der benachbarten Schneidkante entweder parallel hierzu oder auf einer Bogenlinie ausgerichtet bzw. angeordnet ist.

Von dem vorgenannten Stand der Technik ausgehend, ist es Aufgabe der vorliegenden Erfindung, den Schneideinsatz dahingehend weiterzuentwickeln, daß die Spanführung im schneidkantennahen Bereich verbessert wird. Hierbei soll durch eine neue Geometrie der Spanformelemente eine möglichst geringe Reibung zwischen dem ablaufenden Span und der Spanfläche erzielt werden, um eine unerwünschte Erwärmung des Schneideinsatzes im Einsatz zu verhindern.

Diese Aufgabe wird bei einem Schneideinsatz der vorbenannten Art durch den im Anspruch 1 beschriebenen vieleckigen Schneideinsatz gelost. Die erhabenen Spanformelemente sind als Längsrippen ausgebildet sind, deren Längsachsen im wesentlichen senkrecht zur Schneidkante oder unter einem spitzen Winkel zur Schneidkantennormalen verlaufen, und die zu den jeweils übernächsten Längsrippen parallel angeordnet sind.

Aus der US-A 4 710 069 ist zwar ein Schneideinsatz mit einer Freifläche sowie einer Spanfläche mit einer Fase und einer sich hieran anschließenden gekrümmten spanbildenden Fläche bekannt, bei der eine Anzahl von gegeneinander entlang und innerhalb der Schneidkante getrennt angeordnete Vertiefungen zur Überbrückung der Grenzlinie zwischen Fase und der hieran anschließenden gekrümmten Spanfläche vorgesehen ist, wodurch zwischen den Vertiefungen Spanflächenabschnitte gebildet werden, die in Höhe der Schneidkante liegen,jedoch kann es im Bereich der Vertiefungen zu Werkstoffablagerungen auf der Spanfläche kommen, wodurch schließlich eine metallische Reibung mit dem Span entsteht. Dies wiederum erhöht die Aufheizung des Schneideinsatzes, was zu stärkerem Verschleiß führt.

Während nach der US-A-4 710 069 die Vertiefungen eine longitudinale Erstreckung in einer senkrechten Richtung zu der Schneidkante besitzen, wird in der EP 0 404 744 A2 vorgeschlagen, die Vertiefungen als längliche Erstreckungen in einer Richtung unter einem Winkel zwischen 5 bis 45° mit einer Senkrechten zu der Schneidkante auszurichten. Hierdurch soll berücksichtigt werden, daß der Spanflußwinkel gewöhnlicherweise einen Wert von 5 bis 15° hat. Aber auch diese Maßnahme kann nicht verhindern, daß sich während des Bearbeitungsvorganges die Vertiefungen allmählich zusetzen, so daß die betreffende Spanfläche mit fortschreitendem Gebrauch "eingeebnet" wird.

Die vorliegende Erfindung kehrt von dem Prinzip der Ausbildung von Vertiefungen vollständig ab und sieht statt dessen erhabene Spanformelemente als Längsrippen vor. Diese Längsrippen haben infolge ihrer weiteren Erstreckung zur Schneidplattenmitte hin den Vorteil, daß auch für unterschiedliche Schnittbedingungen mit verschiedenen Schnittiefen der Span auch in größeren Abständen von der Schneidkante noch durch die Längsrippen geführt und reibungsarm umgelenkt wird. Die Längsrippen besitzen insbesondere den Vorteil einer guten Wärmeabführung, so daß eie Aufheizung des Schneideinsatzes im Bereich der Schneidkante wesentlich minimiert wird.

Weiterbildungen der Erfindung sind in den Unteransprüchen beschrieben.

So hat es sich als vorteilhaft erwiesen, den Längsrippen senkrecht zu ihrer Längsachse in ihrem oberhalb der Spanflächenebene liegenden Bereich eine im Querschnitt kantenfreie konvexe Form zu geben. Bevorzugt soll die konvexe Form im oberen Bereich einen Radius von 0,1 bis 2 mm, weiterhin vorzugsweise 0,1 bis 1.0 mm aufweisen. Gegenüber einer Normalen zur Spanfläche laufen die Längsrippen senkrecht zu ihrer Längsachse im Bereich der Spanflächenebene unter einem Winkel von mindestens 45° aus.

Dies kann durch betreffende Flächenbereich mit einem größeren Radius als im oberen Bereich oder dadurch erzielt werden, daß die betreffenden Rippenflächenstücke eben ausgestaltet sind bzw. im Querschnitt geradlinig zur Spanfläche hin auslaufen. Bevorzugt bilden die Seitenflächen der Längsrippen im Bereich der Spanfläche im Querschnitt parallel zur Schneidkante gesehen einen Winkel von 90 bis 130°. Alle vorgenannten Maßnahmen dienen einzeln sowie in Kombination dazu, eine möglichst kleine aber kantenfreie Kontaktfläche zwischen den Längsrippen als Spanformelementen und dem ablaufenden Span zu schaffen, andererseits die Oberfläche der Rippen so weit zu erhöhen, daß hierüber beim Zerspanen entstehende Reibungswärme weitgehend abgeführt werden kann. Hierzu dient auch die Maßnahme, die im Bereich der Spanfläche gemessene Basisbreite der Längsrippen relativ groß zu wählen. Für Fräswerkzeuge beträgt die Basisbreite bevorzugt 0,2 bis 0,5 mm, für Dreh- bzw. Bohrwerkzeuge 0,5 bis 1,5 mm.

In entsprechender Optimierung der Spanformelementgeometrie beträgt die Höhe der Längsrippen bei Schneideinsätzen für Fräswerkzeuge 0,02 bis 0,07 mm bzw. für Dreh- oder Bohrwerkzeuge 0,1 bis 0,6 mm.

Wie bereits vorstehend erwähnt, haben Längsrippen den Vorteil, daß auch in schneidkantenferneren Bereichen der Span geformt und durch die Spanformelemente geführt werden kann. Als bevorzugte Länge der Längsrippen hat sich ein Wert erwiesen, bei dem die betreffende Länge 5mal bis 20mal größer als die Basisbreite der Längsrippen ist.

Die unterschiedlichen Einsatzbereiche der Schneideinsätze zum Fräsen einerseits und zum Drehen bzw. Bohren andererseits bestimmen auch den Abstand zweier nebeneinanderliegender Längsrippen, der bevorzugt bei Fräswerkzeugen 0,5 bis 1,5 mm und bei Dreh- oder

Bohrwerkzeugen 1,5 bis 4 mm beträgt. Diese Maße sind jedoch jeweils in Relation zu den vorgenannten Längsrippenhöhen zu sehen und vom vorgesehenen Einsatzbereich des Schneidkörpers abhängig.

Als besonders geeignete Form für eine Längsrippe hat sich die von einem Rotationsellipsoiden abgeleitete Gestalt erwiesen. Die Längsrippen stellen hierbei im wesentlichen die entlang einer parallelen Ebene zur Längsachse abgeschnittene Kappe eines Rotationsellipsoiden dar, womit auch solche Formen eingeschlossen sind, deren Oberflächen zur Spanfläche hin mit einem größeren Radius als die oberen Bereiche bzw. geradflächig oder im Querschnitt geradlinig auslaufen. An ihren zur Schneidkante und/oder zur Schneidplattenmitte hin gerichteten Enden laufen die Rippen vorzugsweise gegenüber der Spanfläche unter einem spitzen Winkel aus, der in einer konkreten Ausführungsform der Erfindung 20° nicht überschreiten soll. Bei der vorgenannten Formgestaltung der Längsrippen wird die im Bereich der Spanfläche gebildete Basisfläche der Längsrippen bevorzugt oval bis länglich-oval sein.

Die Längsrippen können entlang derjeweiligen Schneidkante alle parallel zueinander angeordnet sein, was sowohl eine senkrechte Richtung zur Schneidkante als auch schräge Ausrichtungen einschließt, oder derart, daß die aus jeweils übernächsten Längsrippen gebildete Gruppe von Längsrippen entlang einer Schneidkante parallel zueinander, vorzugsweise unter einem Winkel zu einer Schneidkantennormalen zwischen 1° und 45° verläuft. Insbesondere betrifft dieses Merkmal Ausrichtungen von jeweils benachbarten Längsrippen zu einer Schneidkantennormalen unter einem vom Absolutbetrag gleichen, aber im entgegengesetzten Drehsinn gebildeten Winkel zwischen 5° bis 45°. Dies hat den Vorteil, daß die Schneideinsätze linksdrehend wie rechtsdrehend eingesetzt werden können, wobei die Spanführung jeweils von der Gruppe von Längsrippen im wesentlichen geleistet wird, die etwa in Spanabflußrichtung angeordnet sind.

In einer weiteren Ausführungsform können die Längsrippen hinsichtlich ihrer Längsrippenachse geradlinig oder gekrümmt, vorzugsweise unter einem Radius zwischen 3 mm bis 15 mm verlaufen. Die vorgenannten Winkel werden dann als Auslautwinkel der gekrümmten Längsrippen in Richtung der Schneidkante eingestellt.

Ferner weisen die Längsrippen mindestens einen bis auf die Spanfläche reichenden Einschnitt auf. Durch diese Einschnitte werden die Längsrippen in mehrere hintereinanderliegende Stücke aufgeteilt, wobei die zuvor beschriebene Geometrie der Längsrippen-Vollkörper hinsichtlich der alle Längsrippenstücke begrenzenden Hüllkurve gültig bleibt. Durch die Einschnitte der Längsrippen wird eine weitere Vergrößerung der Spanformelementoberfläche geschaffen, was die Wärmeabfuhr begünstigt, ohne daß die Spanformbildung und -führung durch die Einschnitte beeinflußt wird. Insbesondere können die die Einschnitte begrenzenden Flächen der Längsrippe zur Spanfläche hin spitzwinklig angeordnete ebene Flächen sein, die unter einem Winkel zwischen 20° und 45° zur Spanfläche liegen. Bevorzugt haben die mittleren Längsrippenstücke im Längsquerschnitt eine Trapezform. Als Maß für die Abstände der einzelnen Längsrippenstücke in einer Normalen zur Schneidkante - jeweils einer als Hüllkurve gedachten Längsrippe - betragen bevorzugt 0,2 bis 1 mm.

Wie bereits vorstehend angedeutet, verläuft die in Richtung einer Normalen zur Schneidkante aus jeweiligen hintereinandergeordneten Längsrippenstücken gebildete Hüllfläche kantenfrei.

Nach einer weiteren Ausgestaltung der Erfindung können insbesondere bei Längsrippen mit geradliniger Längsachse jeweils mittlere Längsrippenstücke oder Enden von Längsrippen um eine halbe Abstandsbreite zur nächsten Längsrippe versetzt angeordnet sein.

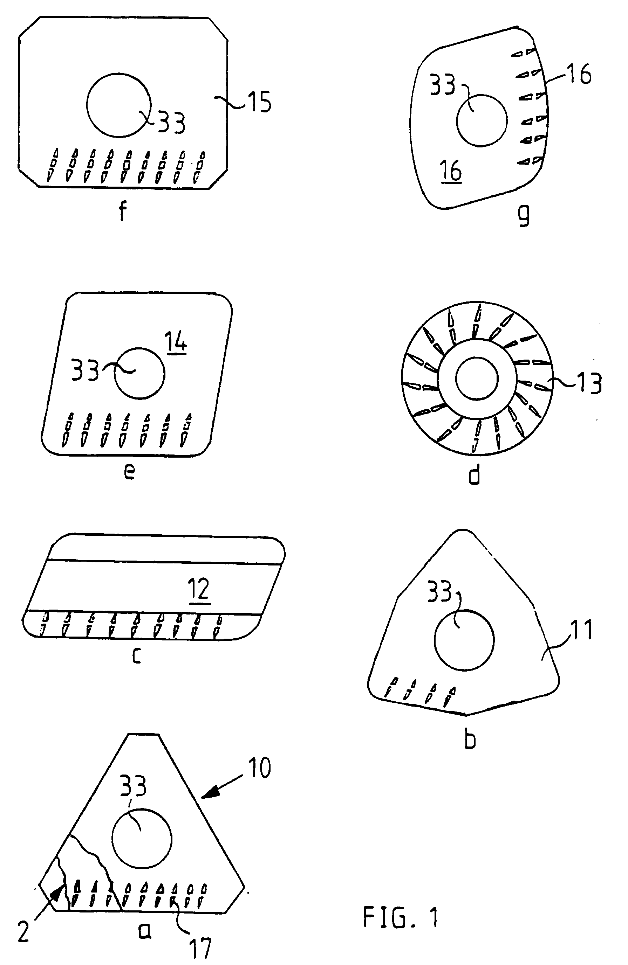

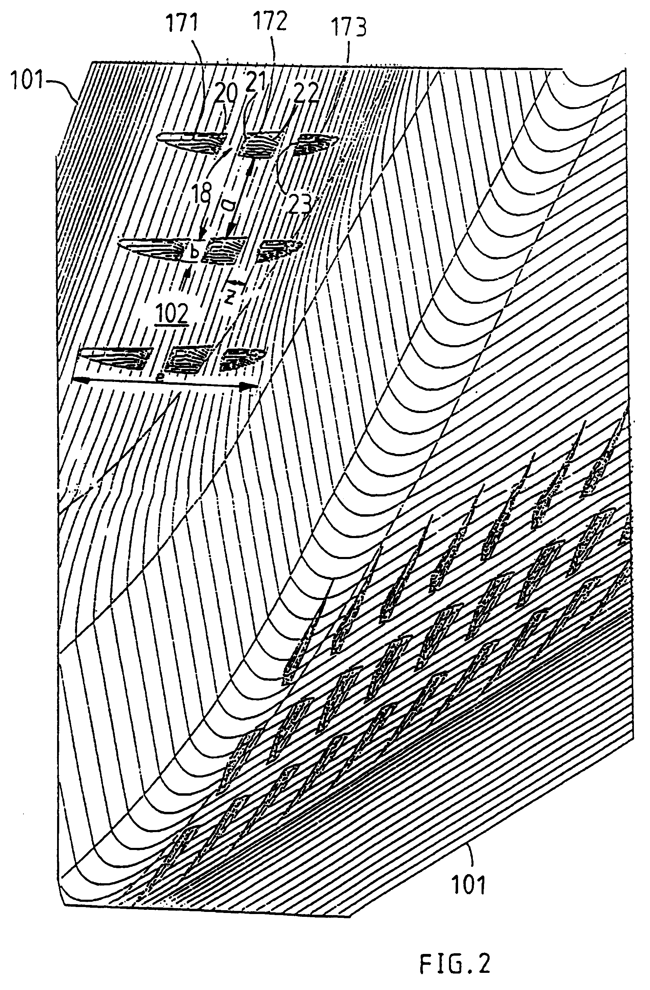

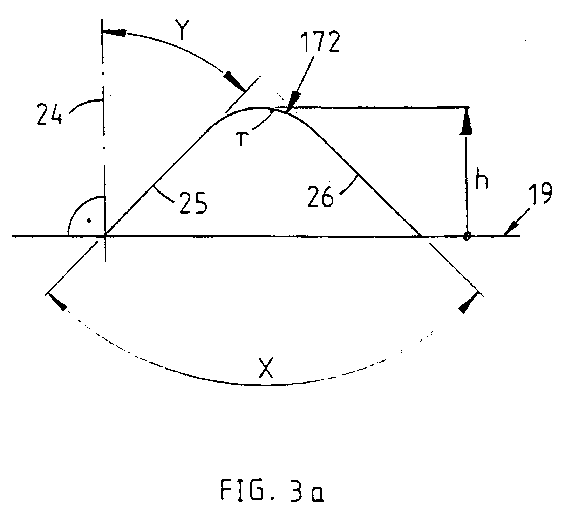

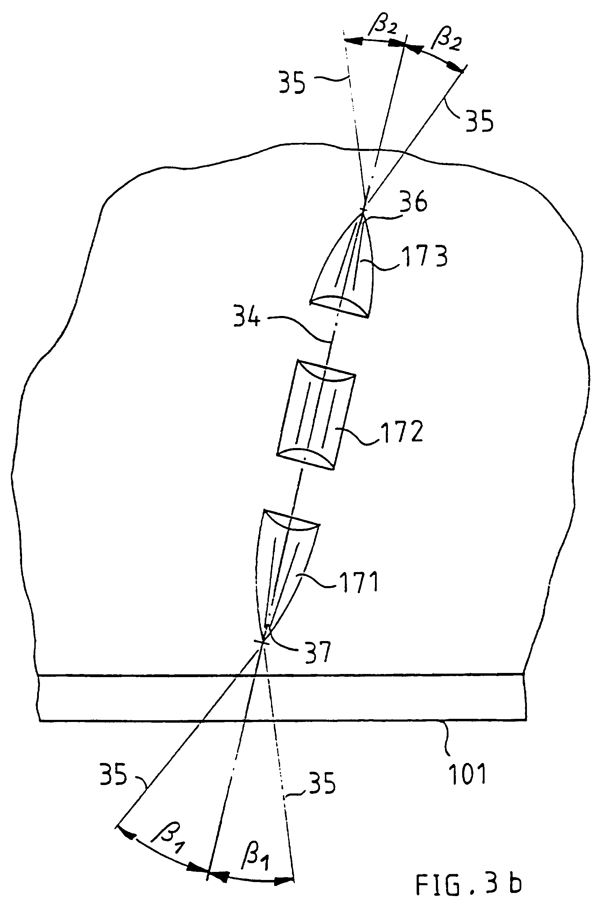

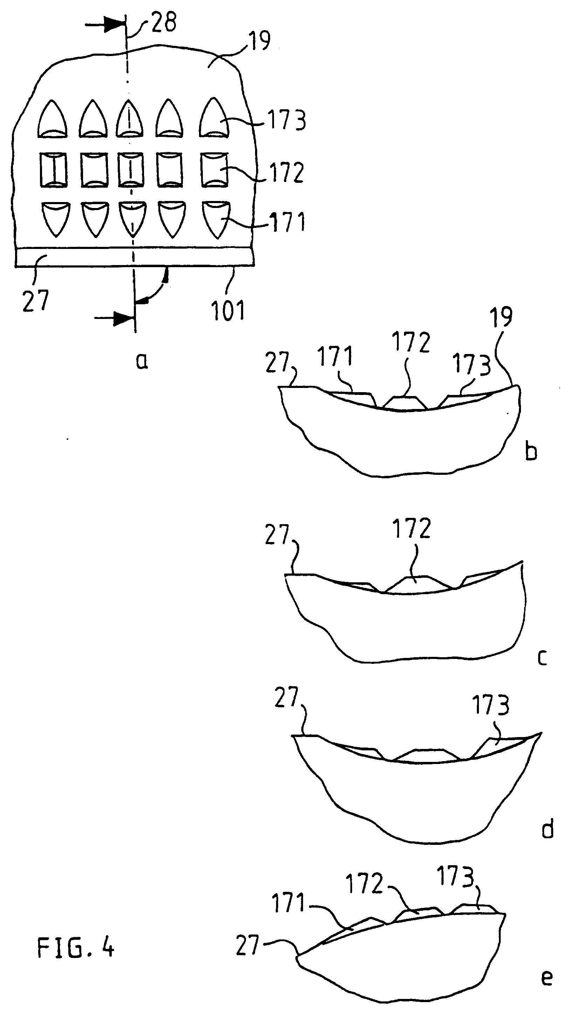

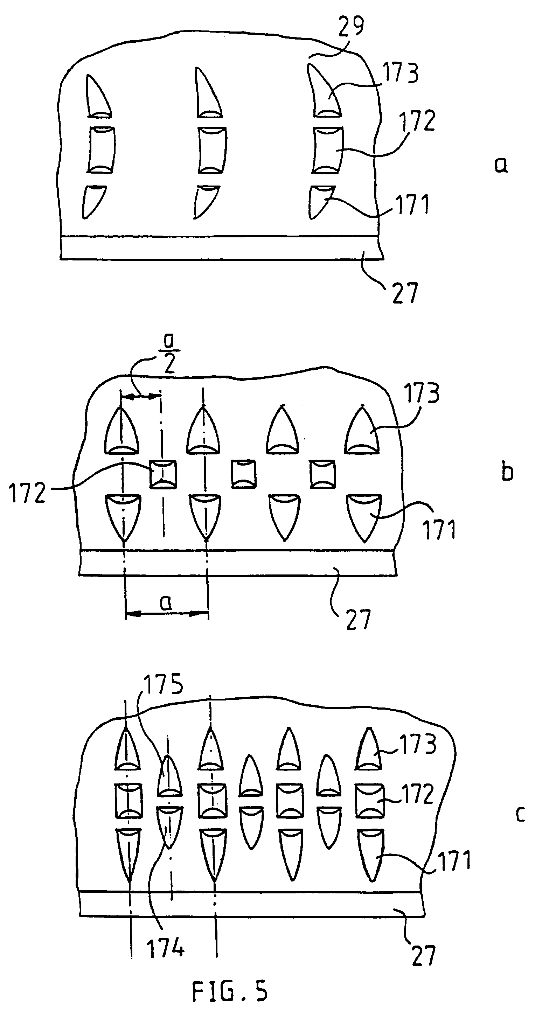

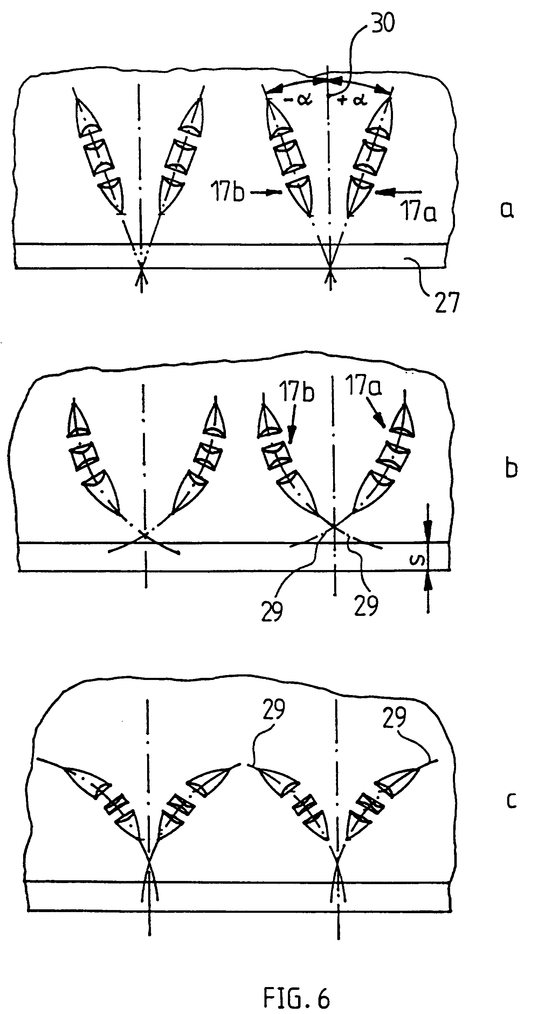

Nach weiteren Ausführungsformen der Erfindung werden die Längsrippen in unterschiedlichen Abständen von der Schneidkante angeordnet oder unterschiedlich lang gestaltet, wobei vorzugsweisediejeweils übernächsten Längsrippen in gleichen Abständen von der Schneidkante liegen oder gleich lang sind. So kann beispielsweise neben einer längeren, durch zwei Einschnitte in drei Stücke geteilten Längsrippe eine kürzere Längsrippe parallel hierzu angeordnet sein, bei der das Mittelstück der längeren Längsrippe ''fortgelassen" ist. als auch linksdrehend eingesetzt werden kann. In einer entsprechenden Abwandlung nach Fig. 6b liegen die um einen Winkel vom Ab solutbetrag geneigten Längsrippen 17a und 17b nicht auf einer Geraden, sondern auch auf einer gekrümmten Bahn 29, die entweder konvex (Fig. 6b) oder konkav (Fig. 6c) ausgebildet sein kann. Auch wenn in Fig. 6 jeweils aus drei Stücken bestehende Längsrippen dargestellt sind, erstreckt sich die vorliegende Erfindung auch auf solche Längsrippen, die aus mehr als drei hintereinander angeordneten Teilstücken bestehen, ebenso auf Kombinationen entsprechend Fig. 4 und 5.

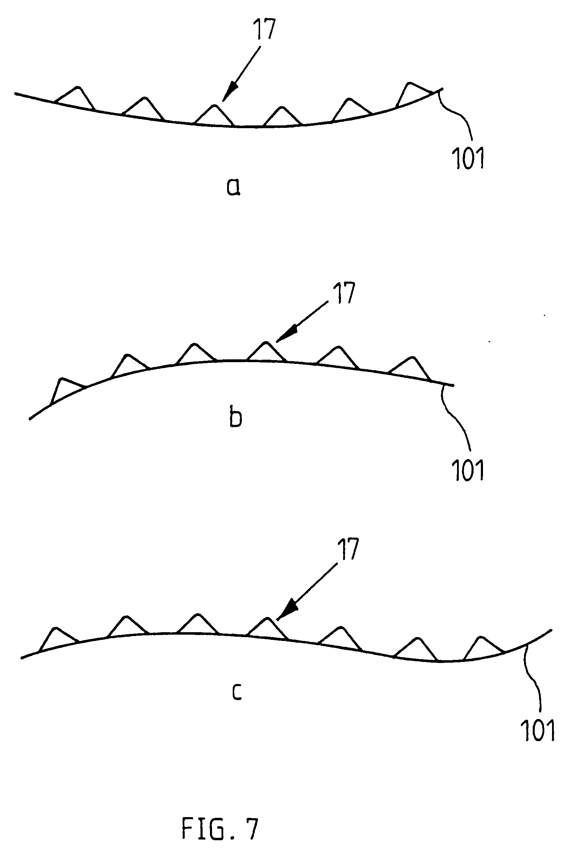

Der Schneidkantenverlauf von einer Schneidecke zur benachbarten kann entsprechend der Fig. 7 positiv (Fig. 7a), negativ (Fig. 7b) oder als Freiform (Fig. 7c) ausgebildet sein. Die Längsrippen 17 als erhabene Spanformelemente können als jeweilige Vollkörper oder durch Einschnitte 18 getrennt ausgebildet werden.

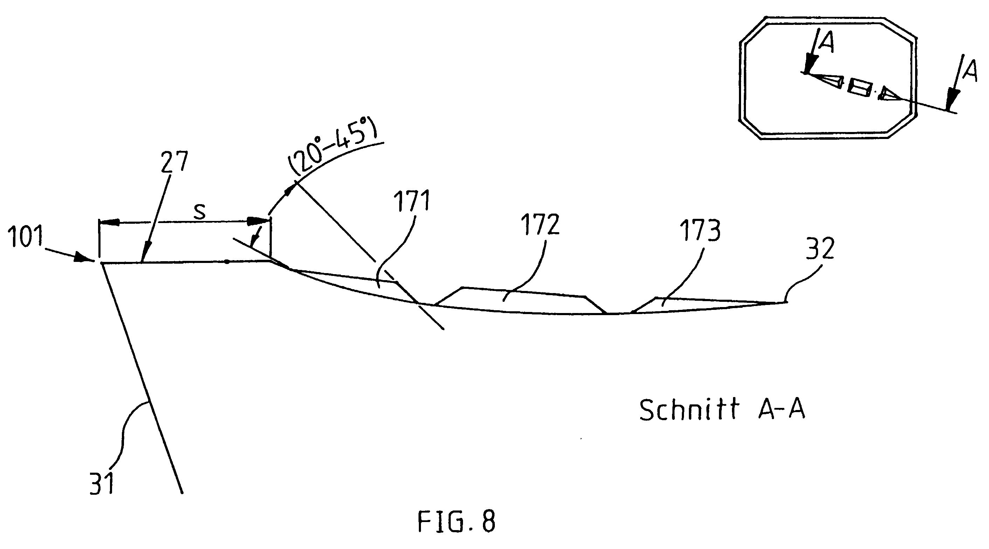

Eine Querschnittsansichtdurch die Längsachse der Längsrippe zeigt Fig. 8. Die Seitenfläche ist als Freifläche 31 ausgebildet, woran sich im Bereich der Spanfläche zunächst mit einer Breite s eine Fase 27 anschließt, die an eine konvexe Spanfläche 32 angrenzt.Die Fase kann auch entfallen, d.h. s=0 gewählt werden. Der tangentiale Neigungswinkel der Spanfläche 32 zur waagerecht verlaufenden Fase 27 bzw.einer entsprechenden Waagerechten kann im Bereich von -15° bis +20° liegen. Im Bereich der konvexen Spanfläche 32 liegen hintereinander die Längsrippenstücke 171, 172 und 173, deren oberste Kanten deutlich unterhalb der durch die Schneidkanten 101 bestimmten Ebene liegt. Die Längsrippenabschnitte 171 bis 173 können sowohl senkrecht zur Schneidkante 101 als auch unter einem schrägen Winkel auf einer geraden oder einer gekrümmten Linie verlaufen.

## Patentansprüche

1. Schneideinsatz (10 bis 16) zur spanbildenden Bearbeitung, der an seinen Spanflächen (29, 32) mit einer Vielzahl von erhabenen Längsrippen (17, 17a, 17b, 171 bis 175) versehen ist, die sich in ihrem Querschnitt nach oben reduzieren und die im Abstand zu den Schneidkanten (101) in Reihe angeordnet sind, wobei die Längsachsen der Längsrippen im wesentlichen senkrecht zur Schneidkante (101) oder unter einem spitzen Winkel (α) zur Schneidkantennormalen (28, 30) verlaufen und die zu den jeweils übernächsten Längsrippen parallel angeordnet sind, wobei die Längsrippen (17) mindestens einen bis auf die Spanfläche (102, 19) reichenden Einschnitt (18) aufweisen.

2. Schneideinsatz nach Anspruch 1, dadurch gekennzeichnet, daß die Längsrippen senkrecht zu ihrer Längsachse in ihrem oberhalb der Spanflächenebene (19) liegenden Bereich eine im Querschnitt kantenfreie konvexe Form aufweisen, vorzugsweise mit einem Radius (r) im oberen Bereich von 0,1 bis 2 mm aufweist.

3. Schneideinsatz nach einem der Ansprüche 1 oder 2, dadurch gekennzeichnet, daß gegenüber einer Normalen (24) zur Spanfläche (19) die Längsrippen (172) senkrecht zu ihrer Längsachse im Bereich der Spanflächenebene (19) unter einem Winkel (γ) von mindestens 45° auslaufen und/oder an ihrem vorderen und/oder hinteren Ende (36, 37) keilförmig ausgebildet sind und unter einem Keilwinkel (β₁, β₂) auslaufen, wobei vorzugsweise die Längsrippen (172) zur Spanfläche hin unter einem größeren Radius als im oberen Bereich oder eben bzw. im Querschnitt geradlinig zur Spanfläche (19) hin auslaufen.

4. Schneideinsatz nach einem der Ansprüche 1 bis 3, dadurch gekennzeichnet, daß im Querschnitt parallel zur Schneidkante (101) die Seitenflächen (25, 26) der Längsrippe (172) im Bereich der Spanfläche (19) einen Winkel (χ) von 90 bis 130° bilden und/oder die im Bereich der Spanfläche (19, 101, 32) gemessene größte Basisbreite (b) der Längsrippen (172) für Fräswerkzeuge 0,2 bis 0,5 mm und für Dreh- oder Bohrwerkzeuge 0,5 bis 1,5 mm und/oder die Höhe (h) der Längsrippen (172) für Fräswerkzeuge 0,02 bis 0,07 mm oder für Dreh- bzw. Bohrwerkzeuge 0,1 bis 0,6 mm und/oder die Länge (1) der Längsrippen 5mal bis 20mal größer als deren Basisbreite (b) beträgt.

5. Schneideinsatz nach einem der Ansprüche 1 bis 4, dadurch gekennzeichnet, daß der Abstand zweier nebeneinanderliegender Längsrippen (17, 17a, 17b) für Fräswerkzeuge 0,5 bis 1,5 mm und für Dreh- bzw. Bohrwerkzeuge 1,5 bis 4 mm beträgt.

6. Schneideinsatz nach einem der Ansprüche 1 bis 5, dadurch gekennzeichnet, daß die Längsrippen im wesentlichen die Form einer in einer parallelen Ebene zur Längsachse abgeschnittenen Kappe eines Rotationsellipsoiden haben, vorzugsweise an ihren zur Schneidkante (101) und/oder zur Schneidplattenmitte hin gerichteten Enden gegenüber der Spanfläche (19, 32, 102) unter einem spitzen Winkel, vorzugsweise unterhalb von 20°, auslaufen.

7. Schneideinsatz nach einem der Ansprüche 1 bis 6, dadurch gekennzeichnet, daß alle Längsrippen (17) parallel zueinander oder die aus jeweils übernächsten Längsrippen (17) gebildete Gruppe von Längsrippen parallel zueinander, vorzugsweise unter einem Winkel zu einer Schneidkantennormalen zwischen 1° und 45° verläuft und/oder jeweils benachbarte Längsrippen (17a, 17b) zu einer Schneidkantennormalen (30) unter einem vom Absolutbetrag gleichen, aber im entgegengesetzten Drehsinn gebildeten Winkel (α) zwischen 5° bis 45° angeordnet sind.

8. Schneideinsatz nach einem der Ansprüche 1 bis 7, dadurch gekennzeichnet, daß die Längsrippenlängsachsen geradlinig oder gekrümmt, vorzugsweise unter einem Radius zwischen 3 bis 15 mm verlaufen (17a, 17b).

9. Schneideinsatz nach einem der Ansprüche 1 bis 8, dadurch gekennzeichnet, daß die die Einschnitte (18) begrenzenden Flächen (20, 21; 22, 23) der Längsrippen (17) zur Spanfläche (102) hin spitzwinklig angeordnete ebene Flächen bilden, wobei vorzugsweise der spitze Winkel der ebenen Flächen 20 bis 45° zur Spanfläche beträgt.

## Claims

1. Cutting insert (10 to 16) for chip-forming machining, which is provided on its rake faces (29, 32) with a plurality of raised longitudinal ribs (17, 17a, 17b, 171 to 175) whose cross section decreases upwardly and which are arranged in rows at a distance from the cutting edges (101), whereby the longitudinal axes of the longitudinal ribs are substantially perpendicular to the cutting edge (101) or run at an acute angel (α) to the plane normal (28, 30) to the cutting edge and are arranged parallel to each next but one longitudinal rib, whereby the longitudinal ribs (17) have at least one notch (18) reaching the rake face (102, 19).

2. Cutting insert according to claim 1, characterised in that the longitudinal ribs, perpendicularly to their longitudinal axes, in their areas located above the rake face plane (19), have a convexly and edgelessly shaped cross section, preferably with the radius (r) of 0.1 to 2 mm in the upper area.

3. Cutting insert according to one of claims 1 or 2, characterised in that with respect to a plane normal (24) to the rake face (19) the longitudinal ribs (172) run perpendicularly to their longitudinal axis in the area of the rake face (19) at an angle (γ) of at least 45° and/or have wedge-shaped frontal ends and/or rear ends (36, 37) and run at a wedge angle (β₁, β₂), whereby preferably the longitudinal ribs (172) terminate towards the rake face under a bigger radius than in the upper area, or run evenly, respectively in a straight line towards the rake face (19).

4. Cutting insert according to one of claims 1 to 3, characterised in that in cross section, parallel to the cutting edge (101) the lateral surfaces (25, 26) of the longitudinal ribs (172) form an angle (χ) of 90° to 130° and/or the biggest base width (b), of the longitudinal ribs (172), measured in the area of the rake face (19, 101, 32) is 0.2 to 0.5 mm for milling tools and 0.5 to 1.5 mm for turning or drilling tools and/or the height (h) of the longitudinal ribs (172) is 0.02 to 0.07 mm for milling tools, or 0.1 to 0.6 mm for turning, respectively drilling tools and/or the length (l) of the longitudinal ribs is 5 times to 20 times bigger than their base width (b).

5. Cutting insert according to one of claims 1 to 4, characterised in that the distance between two neighbouring longitudinal ribs (17, 17a, 17b) is 0.5 to 1.5 mm for milling tools and for turning, respectively drilling tools it is 1.5 to 4 mm.

6. Cutting insert according to one of claims 1 to 5, characterised in that the longitudinal ribs have basically the shape of a cap of an ellipsoid of rotation, cut off in a plane parallel to the longitudinal axis, preferably at their ends directed towards the cutting edge (101) and/or towards the middle of the cutting plate, run with respect to the rake face (19, 31, 102) at an acute angle of preferably less than 20°.

7. Cutting insert according to one of claims 1 to 6, characterised in that all longitudinal-ribs (17) are mutually parallel or the groups of longitudinal ribs formed by every other longitudinal rib (17) are mutually parallel, running at an angle between 1° and 45° to the plane normal to the cutting edge and/or the neighbouring longitudinal ribs (17a, 17b) are arranged with respect to the plane normal (30) to the cutting edge at an angle (α) between 5 to 45°, with the same absolute value but formed in the opposite sense of rotation.

8. Cutting insert according to one of claims 1 to 7, characterised in that the longitudinal-rib axes run in a straight or curved line, preferably at a radius between 3 and 15 mm (17a, 17b).

9. Cutting insert according to one of claims 1 to 8, characterised in that the faces (20, 21; 22, 23) defining the notches (18) of the longitudinal ribs (17) form flat surfaces arranged at an acute angle to the rake face (102), whereby preferably the acute angle of the flat faces with respect to the rake face is 20 to 45°.

## Revendications

1. Insert de coupe (10 à 16) destiné à l'usinage par enlèvement de copeaux, dont les faces de coupe (29, 32) sont munies d'une multitude de nervures longitudinales convexes (17, 17a, 17b, 171 à 175) dont la section transversale diminue vers le haut et qui sont disposés en ligne à une certaine distance par rapport aux tranchants (101), les axes longitudinaux des nervures longitudinales s'étendant pour l'essentiel de manière perpendiculaire au tranchant (101) ou sous un angle aigu (α) par rapport à la normale (28, 30) au tranchant, et qui sont disposées de façon parallèle respectivement aux secondes nervures longitudinales, les nervures longitudinales (17) présentant du moins un creux (18) s'étendant jusqu'à la face de coupe (102, 19),

2. Insert de coupe selon la revendication 1, caractérisé par le fait que les nervures longitudinales présentent perpendiculairement à leur axe longitudinal, dans leur domaine situé au-dessus du plan (19) défini par la face de coupe, une forme convexe sans arêtes en coupe transversale, de préférence avec un rayon (r) compris entre 0,1 et 2 mm dans le domaine supérieur.

3. Insert de coupe selon l'une des revendications 1 ou 2, caractérisé par le fait qu'en face d'une normale (24) à la face de coupe (19), les nervures longitudinales (172) se terminent - perpendiculaire à leur axe longitudinal, dans le domaine du plan (19) défini par la -ce de coupe - sous un angle (γ) de 45° du moins et / ou que leur extrémité avant et / ou arrière (36, 37) est ou bien sont réalisée(s) en forme de coin et se terminent sous un angle du taillant (β₁, β₂), de préférence les nervures longitudinales (172) se terminant vers la face de coupe sous un rayon plus important que dans le domaine supérieur ou se terminant de manière plane ou bien rectiligne en coupe transversale vers la face de coupe (19).

4. Insert de coupe selon l'une des revendications 1 à 3, caractérisé par le fait que - en coupe transversale parallélement au tranchant (101) - les faces latérales (25, 26) de la nervure longitudinale (172) forment dans le domaine de la face de coupe (19) un angle (χ) compris entre 90° et 130° et / ou que la plus grande largeur de base (b) des nervures longitudinales (172), mesurée dans le domaine de la face de coupe (19, 101, 32), est comprise entre 0,2 et 0,5 mm pour des outils de fraisage et entre 0,5 et 1,5 mm pour des outils de tournage ou de perçage et / ou que la hauteur (h) des nervures longitudinales (172) est comprise entre 0,02 et 0,07 mm pour des outils de fraisage et entre 0,1 et 0,6 mm pour des outils de tournage ou bien de perçage et / ou que la longueur (l) des nervures longitudinales est 5 à 20 fois plus grande que leur largeur de base (b).

5. Insert de coupe selon l'une des revendications 1 à 4, caractérisé par le fait que la distance entre deux nervures longitudinales (17, 17a, 17b) disposées côté à côté est comprise entre 0,5 et 1,5 mm pour des outils de fraisage et entre 1,5 et 4 mm pour des outils de tournage ou bien de perçage.

6. Insert de coupe selon l'une des revendications 1 à 5, caractérisé par le fait que les nervures longitudinales présentent pour l'essentiel la forme d'un chapeau d'un ellipsoïde de révolution, ledit chapeau étant coupé dans un plan parallèle a l'axe longitudinal, et que leurs extrémités dirigées vers le tranchant (101) et / ou vers le milieu de la plaquette tranchante de préférence, se terminent en face de la face de coupe (19, 32, 102) sous un angle aigu, de préférence inférieur à 20°.

7. Insert de coupe selon l'une des revendications 1 a 6, caractérisé par le fait que toutes les nervures longitudinales (17) s'étendent de manière paralléle l'une par rapport à l'autre ou que le groupe de nervures longitudinales constitué respectivement de secondes nervures longitudinales (17) qui s'étendent parallèlement l'une par rapport à l'autre, va de préférence sous un angle par rapport à une normale au tranchant, qui est compris entre 1° et 45° et / ou que respectivement des nervures longitudinales voisines (17a, 17b) sont disposées par rapport à une normale (30) au tranchant sous un angle (α) qui est compris entre 5° et 45° et égal pour ce qui est de la valeur absolue, mais qui est formé dans le sens de rotation inverse.

8. Insert de coupe selon l'une des revendications 1 à 7, caractérisé par le fait que les axes longitudinaux des nervures longitudinales s'étendent de manière rectiligne ou courbée, de préférence sous un rayon qui est compris entre 3 et 15 mm (17a, 17b).

9. Insert de coupe selon l'une des revendications 1 a 8, caractérisé par le fait que les faces (20, 21; 22, 23) des nervures longitudinales (17), qui limitent les creux (18), forment des faces planes qui sont disposées à angle aigu par rapport à la face de coupe (102), l'angle aigu formé entre les faces planes et la face de coupe étant de préférence compris entre 20 et 45°.
